# FASCICULE DE BREVET EUROPEEN

(11) **EP 3 044 481 B1**
(45) Date de publication et mention de la délivrance du brevet: **31.08.2022**
(21) Numéro de dépôt: 14784269.4
(22) Date de dépôt: 10.09.2014
(51) Int. Cl.: F16H 61/00, F16H 61/32

(54) **SYSTEME DE COMMANDE D'UNE TRANSMISSION ROBOTISEE**
SYSTEM ZUR STEUERUNG EINES AUTOMATISIERTEN GETRIEBES
SYSTEM FOR CONTROLLING AN AUTOMATED TRANSMISSION

(30) Priorité: 12.09.2013 FR 1358793
(43) Date de publication de la demande: 20.07.2016
(73) Titulaire: Valeo Embrayages, 80009 Amiens Cedex 2 (FR)
(72) Inventeur: MAUREL, Pascal, F-75009 Paris (FR); TACCOEN, Didier, F-80000 Amiens (FR); ROY, Arnaud, F-95800 Cergy PontoiseCedex (FR); RUBIEN, Romain, F-95800 Cergy Pontoise Cedex (FR); BIEGLE, David, F-95800 Cergy Pontoise Cedex (FR)
(86) Numéro de dépôt international: PCT/FR2014/052236
(87) Numéro de publication internationale: WO 2015/036692

(56) Documents cités:
- DE-A1- 19 948 969
- DE-A1-102005 055 221
- FR-A1- 2 795 831
- US-A1- 2003 090 221
- US-A1- 2013 113 407

## Description

### Domaine technique de l'invention

L'invention se rapporte au domaine des transmissions robotisées pour véhicule automobile et concerne plus particulièrement un système de commande d'une transmission robotisée.

### Etat de la technique

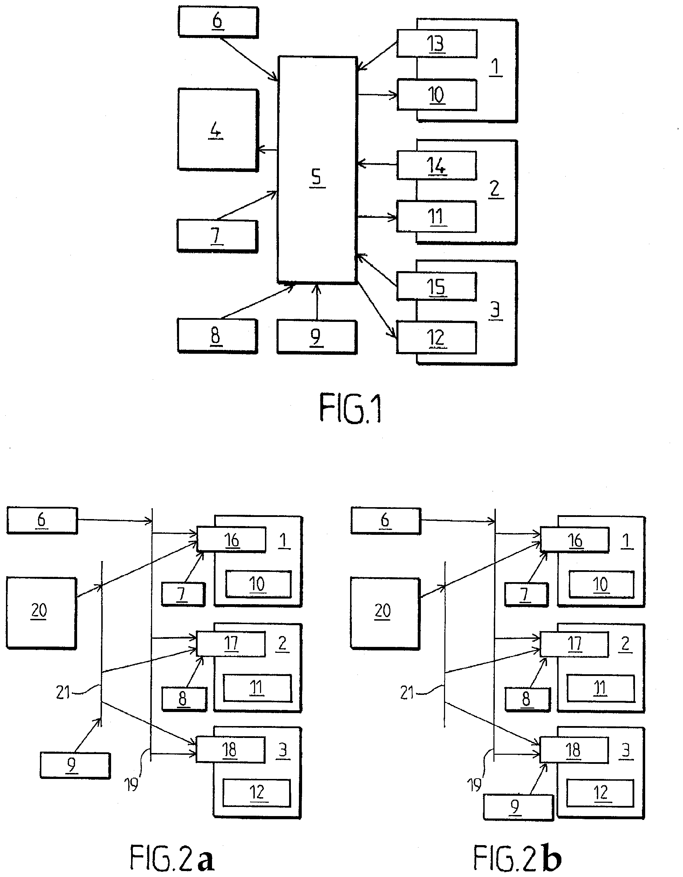

Un exemple de système de commande d'une transmission robotisée, selon l'art antérieur, est illustré sur la figure 1. Le système de commande comporte ici trois actionneurs, à savoir un actionneur 1 assurant l'actionnement d'un embrayage, un actionneur 2 assurant le changement des rapports de la boîte de vitesses et un actionneur 3 assurant la sélection des rapports de la boîte de vitesses.

Le système de commande comporte également une unité 5 de contrôle de la transmission comportant notamment un module de supervision de la transmission mettant en oeuvre des stratégies de gestion de l'agrément de conduite. L'unité 5 de contrôle de la transmission communique avec une unité de contrôle moteur 4 et avec de nombreux capteurs, tels qu'un capteur 7 de mesure du régime de l'arbre d'entrée de la boîte de vitesses, un capteur 8 de température de l'huile dans la boîte de vitesses et un capteur 9 de position du sélecteur de vitesses. L'unité 5 de contrôle de la transmission comporte un module électronique de puissance, pour l'alimentation des moteurs électriques 10, 11, 12 des actionneurs 1, 2, 3, connecté d'une part à la batterie 6 du véhicule et d'autre part aux actionneurs 1, 2, 3 . L'unité 5 de contrôle de la transmission comporte également des moyens de pilotage et d'asservissement permettant d'assurer le pilotage des actionneurs 1, 2, 3. Par ailleurs, l'unité 5 de contrôle de la transmission comporte une pluralité de connecteurs indépendants assurant la connexion de l'unité 5 de contrôle de la transmission aux capteurs de position 13, 14, 15 des actionneurs 1, 2, 3.

La composition de l'unité 5 de contrôle de la transmission, et en particulier de son module électronique de puissance, varie, notamment en fonction du type de transmission robotisée pilotée et de la technologie des actionneurs utilisés. En effet, à titre d'exemple, une transmission robotisée à double embrayage nécessite quatre actionneurs dont deux actionneurs assurant chacun l'actionnement d'un des embrayages alors qu'une transmission robotisée à simple embrayage ne nécessite que trois actionneurs, un seul actionneur suffisant pour assurer l'actionnement du dispositif d'embrayage. Dès lors, chaque type de transmission robotisée nécessite un module électronique de puissance spécifique. De plus, lorsque les moteurs des actionneurs sont du type à courant continu, le module électronique de puissance comporte un pont en H alors que lorsque les moteurs sont du type sans balai, le module électronique comporte un pont triphasé. Dès lors, les unités 5 de contrôle de la transmission ne peuvent être standardisées afin de permettre leur application dans une grande variété de transmissions robotisées.

De plus, l'unité 5 de contrôle de la transmission est soit positionnée avec l'unité de contrôle moteur 4 à l'intérieur du boîtier de logement des batteries soit positionnée sur la boîte de vitesses. Toutefois, chacune de ces deux dispositions présente des inconvénients. En effet, dans le premier cas, les courants de puissance sont acheminés du boîtier de logement des batteries jusqu'aux actionneurs, ce qui pose des problèmes de compatibilité électromagnétique et de perte de puissance significative. Dans le second cas, l'unité 5 de contrôle de la transmission doit supporter les vibrations importantes du groupe motopropulseur ce qui augmente sensiblement le coût de l'unité 5 de contrôle de la transmission.

Du document DE 102005055221 A1 on connaît un système de commande d'une transmission robotisée comportant une unité de contrôle et des actionneurs de transmission reliés à celle-ci par un bus et comprenant un module électronique de puissance, un capteur apte à délivrer un signal représentatif d'un paramètre physique du dispositif d'actionnement et un module de pilotage de l'actionneur apte à commander le module électronique de puissance afin de piloter le dispositif d'actionnement. On connaît de plus de DE 19948969 A1 un autre système de commande d'une transmission robotisée. Ce système comprend une unité de contrôle du groupe moto-propulseur apte à générer un signal de consigne pour le pilotage d'un actionneur de transmission, ladite unité de contrôle du groupe motopropulseur étant apte à communiquer via une interface de multiplexage avec une seconde unité de commande de l'actionneur par l'intermédiaire d'un bus multiplexé.

### Objet de l'invention

L'invention vise à remédier à ces problèmes en proposant un système de transmission robotisée qui soit peu coûteux, facilement adaptable à une grande variété de transmissions robotisées et limitant les problèmes de compatibilité électromagnétique et de perte de puissance.

Selon l'invention, un système de commande d'une transmission robotisée est fourni, pour véhicule automobile, comprenant les caractéristiques de la revendication 1.

Ainsi, le module électronique de puissance étant directement intégré aux actionneurs, les problèmes de compatibilité électromagnétique et de perte de puissance significative de l'art antérieur sont résolus. De plus, le module de pilotage est intégré directement à l'actionneur avec les ressources matérielles nécessaires à son pilotage.

Dès lors, l'unité de contrôle du groupe motopropulseur ne comporte pas de ressources matérielles spécifiques à l'application visée. Ses ressources matérielles peuvent donc être standardisées.

Selon d'autres modes de réalisation avantageux, un tel système de commande peut présenter une ou plusieurs des caractéristiques suivantes :
- l'actionneur de transmission comporte un carter logeant le dispositif électromécanique d'actionnement, le module électronique de puissance, le module de pilotage de l'actionneur et l'interface de multiplexage.
- le capteur est un capteur de position apte à délivrer un signal représentatif de la position du dispositif électromécanique d'actionnement et le module de pilotage de l'actionneur est apte à asservir, en boucle fermée, la position du dispositif électromécanique d'actionnement en fonction du signal représentatif de la position du dispositif électromécanique d'actionnement et d'un signal de consigne de position du dispositif électromécanique d'actionnement généré par l'unité de contrôle du groupe motopropulseur.

- le module électronique de puissance comporte un pont en H de transistors ou un onduleur en pont triphasé.
- le système de commande comporte plusieurs actionneurs de transmission, chacun desdits actionneurs de transmission comportant :
   ∘ un dispositif électromécanique d'actionnement ;
   ∘ un module électronique de puissance pour l'alimentation du dispositif électromécanique d'actionnement ;
   ∘ un capteur apte à délivrer un signal représentatif d'un paramètre physique du dispositif électromécanique d'actionnement ;
   ∘ un module de pilotage de l'actionneur apte à commander le module électronique de puissance afin de piloter le dispositif électromécanique d'actionnement en fonction du signal de consigne généré par l'unité de contrôle de la transmission et du signal représentatif d'un paramètre physique du dispositif électromécanique d'actionnement ; et
   ∘ une interface de multiplexage ; et
- un bus de multiplexage raccordant les interfaces de multiplexage des actionneurs à l'unité de contrôle du groupe motopropulseur.
- le bus de multiplexage est un bus CAN ou LIN ou FlexRay.

L'invention concerne également un véhicule automobile comportant un tel système de commande.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.

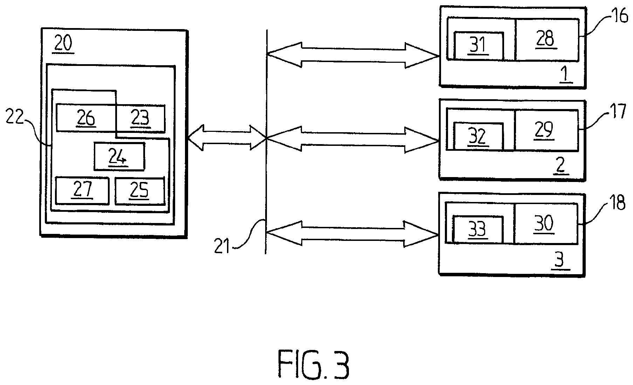

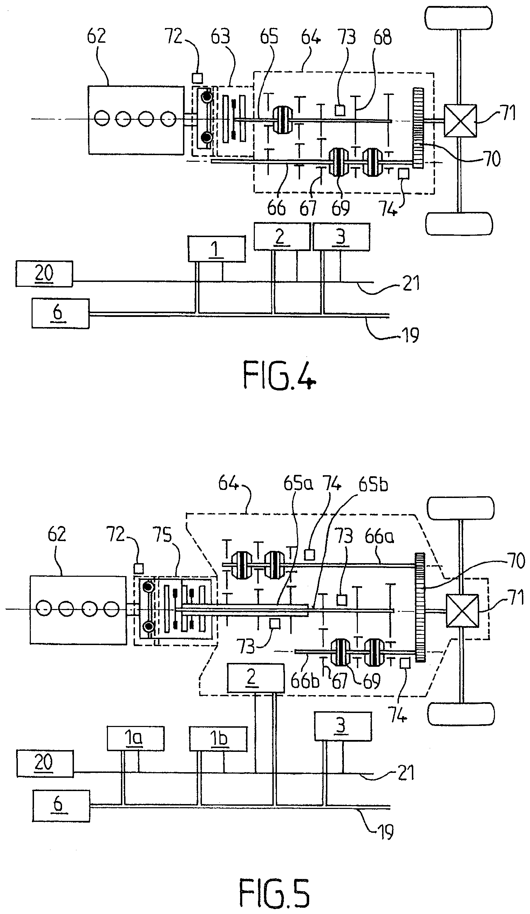

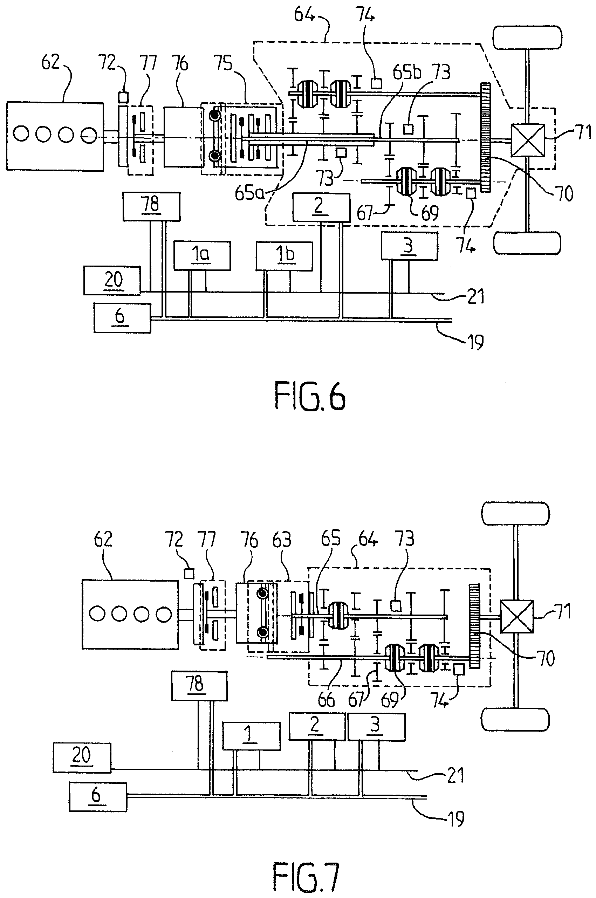

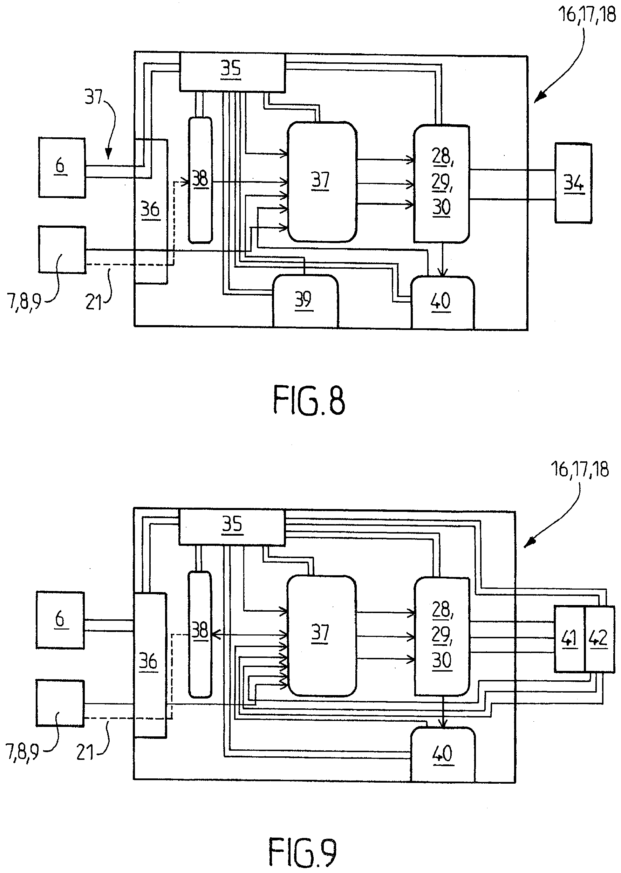

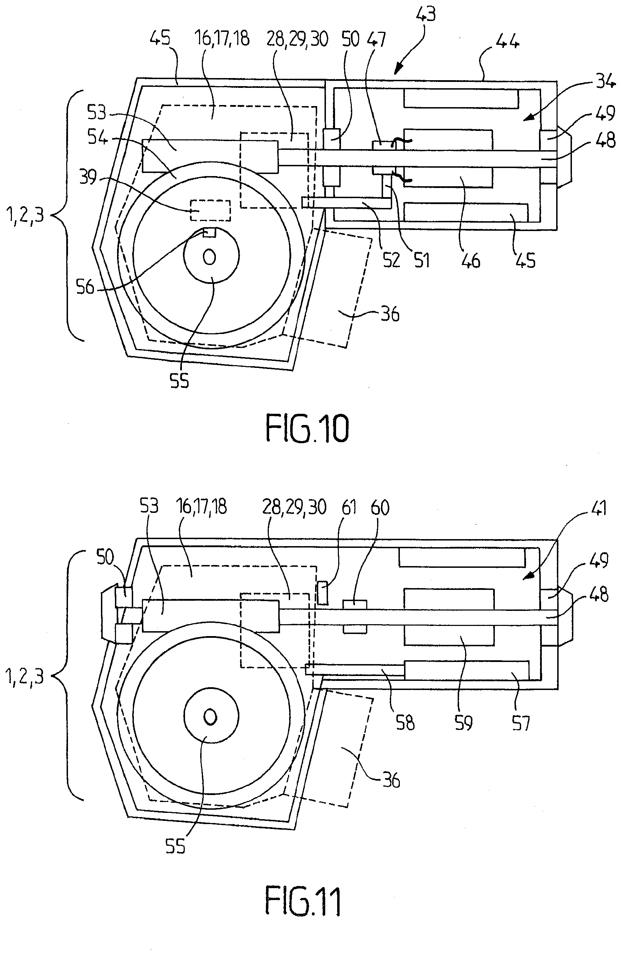

Sur ces figures :
- **La** **figure 1** est un schéma illustrant un système de commande d'une transmission robotisée selon l'art antérieur.
- **La** **figure 2a** est un schéma illustrant un système de commande d'une transmission robotisée selon un mode de réalisation.
- **La** **figure 2b** est un schéma illustrant un système de commande d'une transmission robotisée selon un second mode de réalisation.
- **La** **figure 3** est un schéma fonctionnel détaillé illustrant un système de commande selon un mode de réalisation de l'invention.
- **La** **figure 4** illustre schématiquement l'architecture d'un système de transmission robotisée, à simple embrayage.
- **La** **figure 5** illustre schématiquement l'architecture d'un système de transmission robotisée, à double embrayage.
- **La** **figure 6** illustre schématiquement l'architecture d'un système de transmission à simple embrayage et comportant une chaîne de traction hybride.
- **La** **figure 7** illustre schématiquement l'architecture d'un système de transmission à double embrayage et comportant une chaîne de traction hybride.
- **La** **figure 8** illustre schématiquement une carte électronique d'un actionneur équipé d'un moteur à balais.
- **La** **figure 9** illustre schématiquement une carte électronique d'un actionneur équipé d'un moteur à aimants permanents sans balai.
- **La** **figure 10** est une représentation schématique d'un actionneur équipé d'un moteur à balais.
- **La** **figure 11** est une représentation schématique d'un actionneur équipé d'un moteur à aimants permanents sans balai.

### Description détaillée de modes de réalisation

La figure 2a représente un système de commande d'une transmission pour une transmission robotisée à simple embrayage. Le système de commande comporte un actionneur 1 assurant l'actionnement de l'embrayage, en agissant sur la position de sa butée, un actionneur 2 assurant le changement des rapports de la boîte de vitesses et un actionneur 3 assurant la sélection des rapports de la boîte de vitesses. Chacun des actionneurs 1, 2, 3 comporte une carte électronique intégrée 16, 17, 18 et un dispositif électromécanique d'actionnement équipé d'un moteur électrique 10, 11, 12

Les cartes électroniques 16, 17, 18 comportent chacune un module électronique de puissance, connecté à la batterie 6 du véhicule via un réseau filaire d'alimentation électrique 19, destiné à fournir la puissance électrique nécessaire à l'alimentation de leur équipements électriques et électroniques respectifs (moteur électrique, capteurs et autres), et un module de pilotage de l'actionneur apte à commander le module électronique de puissance afin de piloter le moteur.

Par ailleurs, dans le mode de réalisation représenté, les cartes électroniques 16, 17, 18 sont connectées à des capteurs externes 7, 8 aptes à mesurer des paramètres susceptibles d'être utilisés pour le pilotage des actionneurs 1, 2, 3. A titre d'exemple, l'actionneur 1 assurant l'actionnement de l'embrayage est connectée à un capteur 7 de mesure de la vitesse de rotation de l'arbre d'entrée de la boîte de vitesses et l'actionneur 2 assurant la sélection des rapports de la boîte de vitesses est connecté à un capteur 8 de mesure de la température de l'huile dans la boîte de vitesses.

Les actionneurs 1, 2, 3 sont connectés à une unité centrale de commande du groupe moto propulseur 20 via un bus de multiplexage 21, par exemple du type CAN, LIN ou FlexRay.

Dans le mode de réalisation de la figure 2a, un capteur 9 de position du sélecteur de vitesses est connecté à l'unité centrale 20 de commande du groupe motopropulseur via un bus de multiplexage 21. Dans un autre mode de réalisation représenté sur la figure 2b, le capteur 9 de position du sélecteur de vitesses est directement connecté, de manière filaire, à l'actionneur 3 assurant la sélection des rapports de la boîte de vitesses.

Comme représenté sur la figure 3, l'unité centrale 20 de commande du groupe moto propulseur associe une unité de contrôle de la transmission 22 et une unité de contrôle moteur 23 mettant en oeuvre les stratégies de contrôle moteur. Ainsi, les ressources de calcul et de mémoire peuvent être mutualisées et le nombre d'unités de commande indépendantes est réduit. L'unité centrale de commande 20 comporte les moyens matériels et logiciels nécessaires à la réalisation des fonctions qui seront détaillées ci-dessous. L'unité centrale de commande 20 reçoit de nombreuses informations en provenance du moteur, de la boîte de vitesses et du reste du véhicule, telles que la vitesse de rotation du moteur, le couple fourni par le moteur, la quantité de carburant, la quantité d'air, le rapport de transmission utilisé, la température ambiante, la température du liquide de refroidissement, la vitesse du véhicule, la tension électrique fournie par la batterie du véhicule, la position du sélecteur de vitesses, etc. L'unité centrale de commande 20 peut être constituée par un calculateur moteur hébergeant en outre les ressources logicielles de contrôle de la transmission. L'unité centrale de commande 20 communique via un bus de multiplexage 21 avec les actionneurs 1, 2, 3. A titre d'exemple, le bus de multiplexage 21 peut être soit un bus CAN inter-systèmes soit un bus par CAN dédié.

L'unité de contrôle de la transmission 22 comporte un module 24 de supervision de la transmission mettant en oeuvre des stratégies de gestion de l'agrément de conduite, un module 25 de pilotage de l'embrayage, un module 26 déterminant les lois de changement de rapport et un module 27 de gestion et de pilotage des synchroniseurs de la boîte de vitesses.

Le module 24 de supervision de la transmission reçoit notamment des signaux relatifs au fonctionnement du véhicule, aux intentions du conducteur, au mode automatique de commande de la transmission, à l'adaptabilité du comportement de la transmission, au choix du rapport de transmission à engager ou pré-selectionné en provenance du module 26 déterminant les lois de changement de rapport, à des niveaux de confort et de performances, et génère, à partir de ces informations et des stratégies de gestion enregistrées en mémoire, des signaux de consigne qui sont appliqués à l'unité 23 de contrôle du moteur, des signaux de consigne appliqués au module 25 de pilotage de l'embrayage et des signaux de consignes appliquées au module 27 de gestion des synchroniseurs de la boîte de vitesses. Un tel module 24 de supervision de la transmission est, par exemple, décrit dans le document FR 2 863 326.

Le module 25 de pilotage de l'embrayage reçoit un signal de consigne en provenance du module 24 de supervision de la transmission et des informations fournies par le moteur, la boîte de vitesse et le reste du véhicule et génère, en fonction de ces informations, un signal de consigne à destination d'un module de pilotage de l'actionneur 1. Le module 25 de pilotage de l'embrayage reçoit, par exemple, un signal de consigne de couple à transmettre par l'embrayage ou un signal de consigne de vitesse de glissement entre les plateaux de pression et de réaction de l'embrayage et le disque d'embrayage et génère, en fonction de cette consigne un signal de consigne de position de l'actionneur. Un tel module 25 de pilotage de l'embrayage est notamment décrit dans le document FR2 863 326. Dans un mode de réalisation, le module 25 de pilotage de l'embrayage est équipé de moyens de détermination ou d'estimation du couple réellement transmis par l'embrayage et prend en compte ce paramètre afin de générer un signal de consigne au module 31 de pilotage de l'actionneur d'embrayage 1. Un tel module 31 de pilotage est notamment décrit dans le document FR2 854 848.

Par ailleurs, le module 26 déterminant les lois changement de rapport détermine le rapport de transmission à engager et détermine la stratégie de changement de rapports de transmission à mettre en oeuvre en fonction de données provenant de l'intention conducteur, d'informations provenant de l'état de la transmission fournies par le module de pilotage de l'embrayage 25 et d'informations fournies par l'unité de contrôle moteur 23 de manière à optimiser l'agrément de conduite et minimiser la consommation du véhicule. Le module 27 de gestion des synchroniseurs de la boîte de vitesses sélectionne et coordonne les actionneurs 2, 3 assurant le changement et la sélection des rapports de la boîte de vitesses afin de piloter le synchroniseur et de réaliser le changement de rapport demandé par le module 25 de supervision de la transmission. Pour ce faire, le module 27 de gestion des synchroniseurs est apte à générer des signaux de consigne de position à un module 33 de pilotage de l'actionneur 3 assurant la sélection du synchroniseur correspondant au rapport de la boîte de vitesses à engager et des signaux de consigne de position, vitesse et/ou d'effort à appliquer à un module 32 de pilotage de l'actionneur 2 assurant le désengagement du rapport en cours puis, après la sélection réalisée par le module 33, réalise l'engagement du synchroniseur correspondant au rapport de la boîte de vitesses commandé par le module 25 de supervision de la transmission. Le module 27 comprend également les stratégies d'identification du rapport de boîte de vitesses courant, d'apprentissage des positions de ces rapports et de la grille de boîte et le suivi de l'usure des synchroniseur ainsi que les protection thermique et mécanique des synchroniseurs.

Comme déjà mentionné précédemment, les cartes électroniques 16, 17, 18 des actionneurs 1, 2, 3 hébergent un module électronique de puissance 28, 29, 30 pour l'alimentation électrique des moteurs des actionneurs 1, 2, 3 et un module 31, 32, 33 de pilotage de l'actionneur apte à commander le module électronique de puissance 28, 29, 30 afin de piloter le moteur de l'actionneur. Le module 33 de pilotage permettant de piloter l'actionneur 1 d'embrayage, reçoit un signal de consigne du module 25 de pilotage de l'embrayage, via le bus de multiplexage 21 et les modules 32, 33 de pilotage des actionneurs 2, 3 assurant le changement et la sélection des rapports de la boîte de vitesses reçoivent chacun un signal de consigne du module 27 de gestion des synchroniseurs de la boîte de vitesses.

Les modules 31, 32, 33 de pilotage des actionneurs sont connectés à un capteur apte à mesurer une grandeur physique représentative de la grandeur physique de commande du signal de consigne, telle que la position d'un élément du dispositif électromécanique d'actionnement, par exemple, et comporte des moyens de traitement agencés pour traiter les signaux générés par ledit capteur. Les modules 31, 32, 33 de pilotage des actionneurs sont ainsi aptes à contrôler, en boucle fermée, les dispositifs électromécaniques d'actionnement. Dans un mode de réalisation, le module 31, 32, 33 de pilotage de l'actionneur comporte en outre des moyens correcteurs tels que décrits dans le document FR 2 863 327 permettant de compenser l'écart entre la valeur de consigne déterminée par le module 25 de pilotage de l'embrayage ou par le module 27 de gestion des synchroniseurs de la boîte de vitesses et une mesure de la grandeur physique de consigne et des moyens d'ajustement des paramètres des moyens correcteurs en fonction de variation physique d'environnement, tels que la température et/ou une tension électrique d'alimentation ou de phénomènes tels que le vieillissement et l'usure des composants de l'actionneur et de la commande de l'embrayage.

On observe, sur la figure 3, que les fonctions de supervision et de contrôle, dit de haut niveau, mises en oeuvre par le module 24 de supervision de la transmission, le module 25 de pilotage de l'embrayage, le module 26 déterminant les lois changement de rapport et le module 27 de gestion des synchroniseurs sont hébergés dans l'unité centrale de commande 20 hébergeant également l'unité de contrôle moteur 23. Un tel hébergement est particulièrement avantageux car les modules 24, 25, 26, 27 précités nécessitent surtout des ressources mémoires et une puissance de calcul satisfaisante et utilisent majoritairement des données moteur et véhicule. Par ailleurs, les modules électroniques de puissance 28, 29, 30 pour l'alimentation des actionneurs sont directement intégrés aux actionneurs 1, 2, 3 de telle sorte que les problèmes de compatibilité électromagnétique et de perte de puissance significative de l'art antérieur sont résolus. De plus, les modules de pilotage des actionneurs 31, 32, 33, sont intégrés directement aux actionneurs 1, 2, 3 avec les ressources matérielles, telles que les capteurs de position des actionneurs nécessaires à leur pilotage.

Dans un autre mode de réalisation de l'invention, le module 25 de pilotage de l'embrayage est intégré à l'actionneur 1 assurant l'actionnement de l'embrayage. De même, dans un autre mode de réalisation, le module 27 de gestion des synchroniseurs de la boîte de vitesses est intégré dans un des deux actionneurs 2, 3 de la boîte de vitesses. Dans ces modes de réalisation, le module 25 de pilotage de l'embrayage, le module 27 de gestion des synchroniseurs de la boîte de vitesses communique avec le module 24 de supervision de la transmission via le bus de multiplexage 21.

Les figures 8 et 9 illustrent des schémas fonctionnels de cartes électroniques 16, 17, 18 intégrés aux actionneurs 1, 2, 3, lorsque le moteur est respectivement à balais et sans balai.

Sur la figure 8, la carte électronique 16, 17, 18 est connectée à un moteur à courant continu à balais 34. La carte électronique 16, 17, 18 est raccordée à un connecteur faisceau 36 assurant la connexion de la carte électronique 16, 17, 18, à un circuit d'alimentation électrique 19 relié à la batterie 6 du véhicule et à un bus de multiplexage 24. Dans un mode de réalisation, le connecteur faisceau 36 peut également assurer la connexion de la carte électronique 16, 17, 18 à un ou plusieurs capteurs externes 7, 8, 9, tels qu'un ou plusieurs capteurs 7de mesure de la vitesse de rotation d'un arbre d'entrée de la boîte de vitesses lorsque l'actionneur 1 assure l'actionnement d'un embrayage ou un capteur 8 de mesure de la température de l'huile dans la boîte de vitesses, un capteur 9 de position du sélecteur de vitesses , par exemple de types PRND, PRND+-, PRND accompagné de palettes au volant et/ou un capteur de mesure de la vitesse de rotation de l'arbre de sortie de la boîte de vitesses lorsque l'actionneur 2, 3 assure l'actionnement de la boîte de vitesses.

Dans un mode de réalisation de l'invention, le connecteur faisceau 36 comporte deux connexions permettant de recevoir des conducteurs présentant une forte section, typiquement comprise entre 1,5 et 4 mm².Ces deux connexions permettent de connecter les bornes positive et négative de la batterie et la borne positive et une masse du véhicule. Par ailleurs, lorsque le bus de multiplexage 21 est un bus CAN, le connecteur faisceau comporte des moyens de connexion des lignes CAN_H et CAN_L. Dans ce cas, la carte électronique 16, 17, 18 est mise en marche par l'activité sur le réseau de multiplexage, la carte électronique 16, 17, 18 ne pilotant le dispositif électromécanique d'actionnement que lorsque elle en reçoit l'ordre par les trames circulant sur le bus de multiplexage 21. Dans un autre mode de réalisation, le connecteur faisceau 36 comporte une entrée supplémentaire pour la connexion d'un signal logique d'activation. Ce signal logique d'activation pouvant être généré, soit lors de la mise sous contact du véhicule par le conducteur, soit par l'unité centrale de commande 20.

La carte électronique 16, 17, 18 comporte un dispositif de distribution et/ou de régulation d'alimentation électrique 35, connecté à la batterie 6 du véhicule via le connecteur 36 et apte à délivrer les tensions et puissances appropriées à l'alimentation des composants électriques hébergés sur la carte électronique 16, 17, 18.

La carte électronique 16, 17, 18 comporte, en outre, un module électronique de puissance 28, 29, 30 assurant l'alimentation électrique du moteur à balais 34 et un contrôleur programmable, tel qu'un microcontrôleur 37, faisant notamment office de module de pilotage de l'actionneur. Dans le mode de réalisation représenté, le moteur à alimenter étant un moteur à courant continu à balais 34, le module électronique de puissance 28, 29, 30 comporte un pont en H à transistors MOS.

Par ailleurs, la carte électronique 16, 17, 18 est équipée d'un pilote de multiplexage 38 qui est agencé pour gérer les communications, entrantes ou sortantes, au travers du bus de multiplexage 21, notamment avec l'unité de commande centrale 20, et communique avec une interface dédiée du microcontrôleur 37. Le microcontrôleur 37 est ainsi apte à communiquer avec l'unité de commande centrale 20, et notamment à recevoir un signal de consigne pour le pilotage de l'actionneur.

La carte électronique 16, 17, 18 héberge un ou plusieurs capteurs internes 39, 40 aptes à délivrer un signal représentatif d'un paramètre physique du dispositif électromécanique d'actionnement. Dans le mode de réalisation représenté, la carte électronique 16, 17, 18 héberge un capteur 39 de position du dispositif électromécanique d'actionnement et un capteur 40 mesurant le courant d'alimentation du moteur à balais. Il est également possible d'équiper l'actionneur d'autres capteurs tels qu'un capteur de mesure de la température, par exemple.

Le capteur 39 de position du dispositif électromécanique comporte un élément de détection supporté sur le carte électronique 16, 17, 18 et disposé en vis-à-vis d'une cible montée sur un élément mobile en rotation de la cinématique du dispositif électromécanique d'actionnement. Ainsi, le capteur 39 de position est apte à transmettre au microcontrôleur 37 un signal représentatif de la position du dispositif électromécanique d'actionnement. Ce signal est par exemple un signal analogique ou un signal à modulation de largeur d'impulsion. Dans un mode de réalisation, la cible peut être un aimant permanent et l'élément de détection une sonde à effet hall.

Le microcontrôleur 37 comporte des moyens d'acquisition et de traitement des signaux provenant des capteurs internes 39, 40 ou externes 7, 8, 9. En fonction de la technologie des capteurs 7, 8, 9, 39, 40, le microcontrôleur 37 pourra acquérir les signaux provenant desdits capteurs 7, 8, 9, 39, 40 via une interface analogique, une interface logique, une interface de mesure de pulsation et/ou une interface de mesure de rapport cyclique de modulation de largeur d'impulsion.

Le microcontrôleur 37 est agencé pour commander le module 28, 29, 30 électronique de puissance assurant l'alimentation électrique du moteur 34 au moyen de signaux logiques ou de modulation de largeur d'impulsion. Le microcontrôleur 37 pilote le module 28, 29, 30 électronique de puissance en fonction du signal de consigne reçue du module 25 de pilotage de l'embrayage et des signaux reçus par les capteurs 7, 8, 9, 39, 40. Le microcontrôleur 37 est notamment apte à asservir, en boucle fermée, la position du dispositif électromécanique d'actionnement en fonction du signal généré par le capteur de position 39 et du signal de consigne généré par le module 25 de pilotage de l'embrayage. Le capteur 40 de courant permet au microcontrôleur 37 de moduler la tension appliquée au moteur afin d'optimiser le pilotage en termes de performance et de sécurité de fonctionnement.

Sur la figure 9, la carte électronique 16, 17, 18 est connectée à un moteur 41 à aimants permanents sans balais. L'architecture de la carte électronique 16, 17, 18 est sensiblement similaire à celle décrite en relation avec la figure 8. Toutefois, le moteur 41 étant un moteur à courant triphasé, le module 28, 29, 30 électronique de puissance comporte un onduleur en pont triphasé. Par ailleurs, un capteur de commutation 42 est monté sur le moteur 41 et permet de délivrer, au microcontrôleur 37, un signal représentatif de la position du moteur. Ainsi, le microcontrôleur 37 est apte à asservir, en boucle fermée, la position du dispositif électromécanique d'actionnement en fonction du signal généré par le capteur de commutation 42 et du signal de consigne généré par le module 25 de pilotage de l'embrayage.

Les figures 10 et 11 illustrent schématiquement la structure d'un actionneur 1,2,3.

La figure 10 représente un actionneur 1, 2, 3 équipé d'un moteur à balais et à aimants permanents 34. L'actionneur comporte ici un carter 43 présentant un premier boîtier 44 pour loger le moteur 34 et un second boîtier 45 logeant le dispositif de réduction et la carte électronique 16, 17 18. Dans un mode de réalisation, chacun de ces boîtiers 44, 45 est formé de deux demi-coques pouvant être fixés l'une à l'autre. Le moteur 34 comporte un stator 45 comportant des aimants permanents fixés à l'intérieur du premier boîtier 44 et un rotor 46 bobiné relié à un collecteur 47. Le rotor 46 et le collecteur 47 sont montés sur un arbre moteur 48 monté mobile en rotation sur le carter 43 au moyen d'une paire de paliers à roulement 49, 50. Le collecteur 47 coopère avec des balais 51 qui sont connectés à la carte électronique 16, 17, 18 via des connecteurs 52, tels que des connecteurs à cosse par exemple.

Dans le second boîtier 45, l'arbre moteur 48 porte une vis 53 coopérant avec une roue dentée 54 de sorte à former un mécanisme de réduction. La roue dentée est solidaire en rotation d'un axe de sortie 55. L'axe de sortie 55 peut coopérer avec tout type de dispositif de transmission du mouvement permettant d'agir sur la butée d'embrayage, de sélectionner un rapport ou d'engager un rapport. De tels dispositifs de transmission du mouvement peuvent notamment comprendre une manivelle, un câble ou tout autre moyen de connexion à une bielle, à une fourchette, à un émetteur hydraulique, à une articulation liée à la commande d'un embrayage ou à la commande de passage ou de sélection d'une vitesse de boîte de vitesses.

La carte électronique 16, 17, 18 est montée à l'intérieur du boîtier de logement du réducteur. Par ailleurs, le second boîtier 45 présente une ouverture permettant le passage du connecteur faisceau 36 raccordée à la carte électronique 16, 17, 18. On observe que l'élément de détection du capteur de position 39, porté par la carte électronique 16, 17, 18 est disposé en vis-à-vis d'une cible 56 porté par l'axe de sortie 55.

Un joint d'étanchéité, non représenté, permet de réaliser l'étanchéité entre le connecteur faisceau 36 et le second boîtier 45. Par ailleurs, un second joint d'étanchéité, non représenté, disposé à la jonction entre le premier 44 et le second boîtier 45 permet d'assurer l'étanchéité entre l'intérieur et l'extérieur du carter 43. On notera toutefois qu'afin de simplifier la conception de l'actionneur, aucune étanchéité n'est réalisée entre l'intérieur du premier 44 et du second boîtier 45. Dès lors, les connecteurs 52 connectant le moteur électrique 34 à la carte électronique 16, 17, 18, et passant au travers d'orifices formés dans l'un et/ou l'autre des boîtiers 44, 45 ne nécessitent pas d'agencement d'étanchéité particulier.

La figure 11 représente un actionneur selon un autre mode de réalisation dans lequel le moteur électrique 41 est un moteur sans balais. On ne décrira ci-dessous que les différences entre ce mode de réalisation et celui de la figure 10 décrit précédemment. Dans ce mode de réalisation, le carter 43 ne comporte qu'un boîtier assurant le logement du moteur 41, du dispositif de réduction et de la carte électronique 16, 17, 18. Le stator 57 du moteur 41 comporte une carcasse métallique bobinée qui est connectée à la carte électronique 16, 17, 18 via une barre omnibus 58. L'arbre moteur 48 supporte un rotor à aimants permanents 59. Par ailleurs, l'arbre moteur 48 supporte une cible magnétique 60 qui est disposée en vis-à-vis d'un élément de détection 61. L'élément de détection 61 est ainsi apte à délivrer un signal représentatif de la rotation du moteur 41. L'élément de détection 61 est ici raccordée à la carte électronique 16, 17, 18 via un circuit souple.

La figure 4 illustre l'architecture d'un véhicule équipé d'un système de transmission robotisée à double embrayage. Le véhicule comporte un moteur à combustion 62 dont l'arbre de sortie ou vilebrequin est relié à un arbre d'entrée 65 d'une boîte de vitesses 64 via un embrayage 63. La boîte de vitesses 64 comporte un arbre de sortie 66, parallèle à l'arbre d'entrée, qui est équipé de pignons fous 67 coopérant avec des pignons de vitesses 68 portés par l'arbre d'entrée 65. L'arbre de sortie 66 porte également des moyens 69 de synchronisation et de crabotage permettant de solidariser en rotation les pignons fous 67 à l'arbre de sortie 66 de sorte à transmettre un couple entre l'arbre d'entrée 65 et l'arbre de sortie 66. L'arbre de sortie 66 coopère avec un pignon 70 d'entrée du différentiel 71 afin de transmettre le couple aux roues. Le système de transmission est équipé de nombreux capteurs, tels qu'un capteur 72 de mesure du régime moteur, un capteur 73 de mesure de la vitesse de rotation de l'arbre d'entrée de la boite de vitesses et/ou un capteur 74 de mesure de la vitesse de rotation de l'arbre de sortie.

Le système de commande comporte un actionneur 1 agissant sur la position de la butée de l'embrayage 63, un actionneur 2 pour le changement des rapports et un actionneur 3 pour la sélection des rapports. Les actionneurs 1, 2, 3 sont reliés à l'unité centrale de commande 20 via le bus de multiplexage 21 et à la batterie 6 via le circuit d'alimentation 19. Ainsi, l'on observe que la quantité de câblage à installer est limitée.

La figure 5 représente une architecture d'un véhicule équipé d'une transmission robotisée à double embrayage. Dans cette architecture, la boîte de vitesse comporte deux arbres d'entrée concentriques 65a, 65b. Un des embrayages du double embrayage 75 permet de transmettre le couple moteur vers l'un des arbres d'entrée 65a, 65b alors que l'autre embrayage permet de transmettre le couple moteur vers l'autre arbre d'entrée 65b, 65a. La boîte de vitesse comporte également deux arbres secondaires 66a, 66b coopérant respectivement avec les rapports pairs et les rapports impairs. Dans ce mode de réalisation, le système de commande comporte deux actionneurs 1a, 1b assurant l'actionnement de leur embrayage respectif.

Nous notons par ailleurs que lorsque la boîte de vitesses 64 est une boîte de vitesses à commande de changement de rapport par barillet, le système de commande ne nécessite, pour la robotisation de la boîte de vitesses 64, que des actionneurs 3 assurant le passage des rapports et pas d'actionneur 2 assurant la sélection du rapport la sélection étant assurée par la came du barillet.

Les figures 6 et 7 illustrent un véhicule équipé d'un système de transmission robotisée à double embrayage et d'une chaîne de traction hybride. Par rapport aux véhicules illustrés sur les figures 4 et 5, les véhicules illustrés sur les figures 6 et 7 comportent une machine électrique 76 et un embrayage supplémentaire 77, disposé entre la machine électrique et le moteur 62. L'embrayage 77, côté moteur, permet de coupler ou désaccoupler en rotation le vilebrequin du moteur 62, non représenté, au rotor de la machine électrique 76. L'embrayage 63 ou double embrayage 75, côté boîte de vitesses, permet de coupler ou désaccoupler en rotation le rotor de la machine électrique 76 à un ou plusieurs arbres 65, 65a, 65b d'entrée de la boîte de vitesses. La machine électrique 76 est une machine électrique tournante réversible, par exemple du type alterno-démarreur. En mode démarreur, l'embrayage 77, côté moteur, est embrayé et la machine électrique 76 permet le démarrage du moteur thermique. En mode alternateur, la machine électrique 76 permet de recharger une batterie 20 du véhicule et/ou d'alimenter les organes ou équipements consommateurs d'énergie lorsque le moteur thermique tourne. Elle est en outre configurée pour récupérer de l'énergie lors du freinage du véhicule. La machine électrique 76 peut notamment être configurée pour arrêter le moteur thermique, par exemple, au feu rouge ou dans les bouchons, et le redémarrer ensuite (Fonction Stop and Go en Anglais). Dans un mode de réalisation, elle est apte à fournir un surplus de puissance permettant d'éviter que le moteur cale (fonction boost en Anglais). Par ailleurs, la machine électrique 76 peut être dimensionnée de manière à entraîner le véhicule en traction électrique pure pour réaliser le décollage du véhicule et des trajets de type urbain, l'embrayage 77, côté moteur, étant alors désengagé et le moteur thermique arrêté. Le passage d'un mode traction électrique à un mode traction thermique ou inversement ainsi que la régénération des batteries sont alors réalisés par un calculateur de supervision de chaine de traction et des électroniques de puissance associés, non représentés sur les figures.

Pour ce type d'architecture, il est donc nécessaire de prévoir un actionneur supplémentaire 78 permettant d'agir sur la butée de l'embrayage 77, côté moteur. L'actionneur 78 comporte une structure similaire à celle des actionneurs 1, 2, 3 décrits précédemment. Il est également connectée, d'une part à l'unité centrale de commande 20 via le bus de multiplexage 21 et à la batterie 6 via le circuit d'alimentation 19.

On observe que selon l'agencement du système de commande de transmission selon l'invention, il est possible d'utiliser pour les architectures des figures 4 à 7, des unités centrales de commande 20 identique en termes de ressources matérielles.

Par ailleurs, dans un mode de réalisation non représenté, l'unité centrale de commande 20 est intégrée dans l'un des actionneurs 1, 2, 3 et communique via le bus de multiplexage 21 avec les autres actionneurs.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Système de commande d'une transmission robotisée, pour véhicule automobile, comprenant :
- une unité (20)de contrôle du groupe moto propulseur apte à générer un signal de consigne pour le pilotage d'un actionneur de transmission; ladite unité (20) de contrôle du groupe motopropulseur étant apte à communiquer via une interface de multiplexage ;
- un actionneur (1, 1a, 1b, 2, 3, 78) de transmission apte à assurer l'actionnement d'un embrayage (63, 75), la sélection des rapports d'une boîte de vitesses (64) ou le changement des rapports d'une boîte de vitesses (64), ledit actionneur de transmission comportant :
▪ un dispositif électromécanique d'actionnement ;
▪ un module (28, 29, 30) électronique de puissance pour l'alimentation du dispositif électromécanique d'actionnement ;
▪ un capteur (39, 41) apte à délivrer un signal représentatif d'un paramètre physique du dispositif électromécanique d'actionnement ;
▪ une module (31, 32, 33) de pilotage de l'actionneur apte à commander le module (28, 29, 30) électronique de puissance afin de piloter le dispositif électromécanique d'actionnement en fonction du signal de consigne généré par l'unité (20) de contrôle du groupe moto propulseur et du signal représentatif d'un paramètre physique du dispositif électromécanique d'actionnement ; et
▪ une interface de multiplexage ; et
- un bus de multiplexage (21) raccordant les interfaces de multiplexage de l'actionneur et de l'unité (20) de contrôle du groupe motopropulseur,
- l'actionneur de transmission comportant un connecteur (36) assurant la connexion de l'actionneur de transmission (1, 1a, 1b, 2, 3, 78) à un bus de multiplexage (21) et à un réseau d'alimentation électrique (19) connecté à la batterie (6) du véhicule,
- le connecteur (36) assurant la connexion de l'actionneur de transmission (1, 1a, 1b, 2, 3, 78) à un ou plusieurs capteurs externes choisis parmi un capteur (7, 73) de mesure de la vitesse de rotation d'un arbre d'entrée de la boîte de vitesses, un capteur (8) de mesure de la température de l'huile dans la boîte de vitesses, un capteur (9) de position du sélecteur de vitesses, et
- l'unité (20) de contrôle du groupe motopropulseur étant une unité centrale comportant une unité de contrôle moteur (23) apte à mettre en œuvre des stratégies de contrôle moteur et une unité (22) de contrôle de la transmission apte à générer le signal de consigne pour le pilotage d'un actionneur de transmission.

2. Système de commande d'une transmission selon la revendication 1, dans lequel l'actionneur (1, 1a, 1b, 2, 3, 78) de transmission comporte un carter (43) logeant le dispositif électromécanique d'actionnement, le module électronique de puissance (28, 29, 30), le module (31, 32, 33) de pilotage de l'actionneur et l'interface de multiplexage.

3. Système de commande d'une transmission selon la revendication 1 ou 2, dans lequel le capteur est un capteur de position (39, 41) apte à délivrer un signal représentatif de la position du dispositif électromécanique d'actionnement et dans lequel le module (31, 32, 33) de pilotage de l'actionneur est apte à asservir, en boucle fermée, la position du dispositif électromécanique d'actionnement en fonction du signal représentatif de la position du dispositif électromécanique d'actionnement et d'un signal de consigne de position du dispositif électromécanique d'actionnement généré par l'unité (20) de contrôle du groupe moto propulseur.

4. Système de commande d'une transmission selon l'une quelconque des revendications 1 à 3, dans lequel le module (28, 29, 30) électronique de puissance comporte un pont en H de transistors ou un onduleur en pont triphasé.

5. Système de commande d'une transmission selon l'une quelconque des revendications 1 à 4, comprenant plusieurs actionneurs (1, 1a, 1b, 2, 3, 78) de transmission, chacun desdits actionneurs (1, 1a, 1b, 2, 3, 78) de transmission comportant :
∘ un dispositif électromécanique d'actionnement ;
∘ un module (28, 29, 30) électronique de puissance pour l'alimentation du dispositif électromécanique d'actionnement ;
∘ un capteur (39, 41) apte à délivrer un signal représentatif d'un paramètre physique du dispositif électromécanique d'actionnement ;
∘ une module (31, 32, 33) de pilotage de l'actionneur apte à commander le module (28, 29, 30) électronique de puissance afin de piloter le dispositif électromécanique d'actionnement en fonction du signal de consigne généré par l'unité (22) de contrôle de la transmission et du signal représentatif d'un paramètre physique du dispositif électromécanique d'actionnement ; et
∘ une interface de multiplexage ; et
- un bus de multiplexage (21) raccordant les interfaces de multiplexage des actionneurs à l'unité (20) de contrôle du groupe motopropulseur.

6. Système de commande d'une transmission dans lequel le bus de multiplexage est un bus CAN, LIN ou FlexRay.

7. Véhicule automobile comportant un système de commande selon l'une quelconque des revendications 1 à 6.

## Patentansprüche

1. Steuersystem eines automatisierten Getriebes für ein Kraftfahrzeug, das enthält:
- eine Steuereinheit (20) des Antriebsstrangs, die geeignet ist, ein Sollsignal für die Steuerung eines Getriebeaktors zu generieren; wobei die Steuereinheit (20) des Antriebsstrangs geeignet ist, über eine Multiplexschnittstelle zu kommunizieren;
- einen Getriebeaktor (1, 1a, 1b, 2, 3, 78), der geeignet ist, die Betätigung einer Kupplung (63, 75), die Auswahl der Gänge eines Schaltgetriebes (64) oder den Wechsel der Gänge eines Schaltgetriebes (64) zu gewährleisten, wobei der Getriebeaktor aufweist:
• eine elektromechanische Betätigungsvorrichtung;
• ein elektronisches Leistungsmodul (28, 29, 30) für die Versorgung der elektromechanischen Betätigungsvorrichtung;
• einen Sensor (39, 41), der geeignet ist, ein Signal zu liefern, das für einen physikalischen Parameter der elektromechanischen Betätigungsvorrichtung repräsentativ ist;
• ein Steuermodul (31, 32, 33) des Aktors, das geeignet ist, das elektronische Leistungsmodul (28, 29, 30) zu steuern, um die elektromechanische Betätigungsvorrichtung abhängig von dem von der Steuereinheit (20) des Antriebsstrangs generierten Sollsignal und von dem für einen physikalischen Parameter der elektromechanischen Betätigungsvorrichtung repräsentativen Signal zu steuern; und
• eine Multiplexschnittstelle; und
- einen Multiplexbus (21), der die Multiplexschnittstellen des Aktors und der Steuereinheit (20) des Antriebsstrangs miteinander verbindet,
- wobei der Getriebeaktor einen Verbinder (36) aufweist, der die Verbindung des Getriebeaktors (1, 1a, 1b, 2, 3, 78) mit einem Multiplexbus (21) und mit einem Stromversorgungsnetz (19) gewährleistet, das mit der Batterie (6) des Fahrzeugs verbunden ist,
- wobei der Verbinder (36) die Verbindung des Getriebeaktors (1, 1a, 1b, 2, 3, 78) mit einem oder mehreren externen Sensoren gewährleistet, die ausgewählt werden unter einem Sensor (7, 73) zur Messung der Drehgeschwindigkeit einer Antriebswelle des Schaltgetriebes, einem Sensor (8) zur Messung der Temperatur des Öls im Schaltgetriebe, einem Positionssensor (9) des Gangwahlschalters, und
- die Steuereinheit (20) des Antriebsstrangs eine Zentraleinheit ist, die eine Motorsteuerungseinheit (23), die geeignet ist, Motorsteuerungsstrategien durchzuführen, und eine Steuereinheit (22) des Getriebes aufweist, die geeignet ist, das Sollsignal zum Steuern eines Getriebeaktors zu erzeugen.

2. Steuersystem eines Getriebes nach Anspruch 1, wobei der Getriebeaktor (1, 1a, 1b, 2, 3, 78) ein Gehäuse (43) aufweist, in dem die elektromechanische Betätigungsvorrichtung, das elektronische Leistungsmodul (28, 29, 30), das Steuermodul (31, 32, 33) des Aktors und die Multiplexschnittstelle untergebracht sind.

3. Steuersystem eines Getriebes nach Anspruch 1 oder 2, wobei der Sensor ein Positionssensor (39, 41) ist, der geeignet ist, ein für die Position der elektromechanischen Betätigungsvorrichtung repräsentatives Signal zu liefern, und wobei das Steuermodul (31, 32, 33) des Aktors geeignet ist, in geschlossenem Regelkreis die Position der elektromechanischen Betätigungsvorrichtung abhängig von dem für die Position der elektromechanischen Betätigungsvorrichtung repräsentativen Signal und von einem Positionssollsignal der elektromechanischen Betätigungsvorrichtung zu regeln, das von der Steuereinheit (20) des Antriebsstrangs erzeugt wird.

4. Steuersystem eines Getriebes nach einem der Ansprüche 1 bis 3, wobei das elektronische Leistungsmodul (28, 29, 30) eine H-Brücke von Transistoren oder einen dreiphasigen Brückenwechselrichter aufweist.

5. Steuersystem eines Getriebes nach einem der Ansprüche 1 bis 4, das mehrere Getriebeaktoren (1, 1a, 1b, 2, 3, 78) enthält, wobei jeder der Getriebeaktoren (1, 1a, 1b, 2, 3, 78) aufweist:
o eine elektromechanische Betätigungsvorrichtung;
o ein elektronisches Leistungsmodul (28, 29, 30) für die Versorgung der elektromechanischen Betätigungsvorrichtung;
o einen Sensor (39, 41), der geeignet ist, ein für einen physikalischen Parameter der elektromechanischen Betätigungsvorrichtung repräsentatives Signal zu liefern;
o ein Steuermodul (31, 32, 33) des Aktors, das geeignet ist, das elektronische Leistungsmodul (28, 29, 30) zu steuern, um die elektromechanische Betätigungsvorrichtung abhängig von dem von der Steuereinheit (22) des Getriebes erzeugten Sollsignal und von dem für einen physikalischen Parameter der elektromechanischen Betätigungsvorrichtung repräsentativen Signal zu steuern; und
o eine Multiplexschnittstelle; und
- einen Multiplexbus (21), der die Multiplexschnittstellen der Aktoren an die der Steuereinheit (20) des Antriebsstrangs anschließt.

6. Steuersystem eines Getriebes, wobei der Multiplexbus ein CAN-, LIN- oder FlexRay-Bus ist.

7. Kraftfahrzeug, das ein Steuersystem nach einem der Ansprüche 1 bis 6 aufweist.

## Claims

1. Control system for a robotized transmission, for a motor vehicle, comprising:
a power train control unit (20) suitable for generating a setpoint signal for driving a transmission actuator; said power train control unit (20) being able to communicate via a multiplexing interface;
a transmission actuator (1, 1a, 1b, 2, 3, 78) suitable for ensuring the actuation of a clutch (63, 75), the selection of the ratios of a gearbox (64) or the changing of the ratios of a gearbox (64), said transmission actuator comprising:
∘ an electromechanical actuation device;
∘ a power electronic module (28, 29, 30) for powering the electromechanical actuation device;
∘ a sensor (39, 41) suitable for delivering a signal representative of a physical parameter of the electromechanical actuation device;
∘ a module (31, 32, 33) for driving the actuator suitable for controlling the power electronic module (28, 29, 30) in order to drive the electromechanical actuation device as a function of the setpoint signal generated by the power train control unit (20) and of the signal representative of a physical parameter of the electromechanical actuation device; and
∘ a multiplexing interface; and
a multiplexing bus (21) connecting the multiplexing interfaces of the actuator and of the power train control unit (20),
the transmission actuator comprising a connector (36) ensuring the connection of the transmission actuator (1, 1a, 1b, 2, 3, 78) to a multiplexing bus (21) and to an electrical power supply network (19) connected to the battery (6) of the vehicle,
the connector (36) ensuring the connection of the transmission actuator (1, 1a, 1b, 2, 3, 78) to one or more external sensors chosen from a sensor ( 7,73) for measuring the speed of rotation of an input shaft of the gearbox, a sensor (8) for measuring the temperature of the oil in the gearbox and a speed selector position sensor (9),
the power train control unit (20) being a central unit comprising an engine control unit (23) suitable for implementing engine control strategies and a transmission control unit (22) suitable for generating the setpoint signal for driving a transmission actuator.

2. Control system for a transmission according to Claim 1, in which the transmission actuator (1, 1a, 1b, 2, 3, 78) comprises a housing (43) housing the electromechanical actuation device, the power electronic module (28, 29, 30), the module (31, 32, 33) for driving the actuator and the multiplexing interface.

3. Control system for a transmission according to Claim 1 or 2, in which the sensor is a position sensor (39, 41) suitable for delivering a signal representative of the position of the electromechanical actuation device and in which the module (31, 32, 33) for driving the actuator is suitable for servo-controlling, in closed loop mode, the position of the electromechanical actuation device as a function of the signal representative of the position of the electromechanical actuation device and of a setpoint position signal of the electromechanical actuation device generated by the power train control unit (20).

4. Control system for a transmission according to any one of Claims 1 to 3, in which the power electronic module (28, 29, 30) comprises an H-configuration bridge of transistors or a three-phase bridge inverter.

5. Control system for a transmission according to any one of Claims 1 to 4, comprising a number of transmission actuators (1, 1a, 1b, 2, 3, 78) each of said transmission actuators (1, 1a, 1b, 2, 3, 78) comprising:
∘ an electromechanical actuation device;
∘ a power electronic module (28, 29, 30) for powering the electromechanical actuation device;
∘ a sensor (39, 41) suitable for delivering a signal representative of a physical parameter of the electromechanical actuation device;
∘ a module (31, 32, 33) for driving the actuator suitable for controlling the power electronic module (28, 29, 30) in order to drive the electromechanical actuation device as a function of the setpoint signal generated by the transmission control unit (22) and of the signal representative of a physical parameter of the electromechanical actuation device; and
∘ a multiplexing interface; and
- a multiplexing bus (21) connecting the multiplexing interfaces of the actuators to the power train control unit (20).

6. Control system for a transmission in which the multiplexing bus is a CAN, LIN or FlexRay bus.

7. Motor vehicle comprising a control system according to any one of Claims 1 to 6.
